# EUROPÄISCHE PATENTSCHRIFT

(11) **EP 1 635 513 B1**
(45) Veröffentlichungstag und Bekanntmachung des Hinweises auf die Patenterteilung: **21.02.2007**
(21) Anmeldenummer: 04021492.6
(22) Anmeldetag: 09.09.2004
(51) Int. Cl.: H04L 12/56, H04L 12/28

(54) **Datenverarbeitungsgerät zum Einsatz in einem Ad-hoc-Netzwerk und Ad-hoc-Netzwerk dazu**
Data processing device for ad-hoc network and ad-hoc network therefor
Appareil de traitement de données pour réseau ad-hoc et réseau ad-hoc

(43) Veröffentlichungstag der Anmeldung: 15.03.2006
(73) Patentinhaber: SIEMENS AKTIENGESELLSCHAFT, 80333 München (DE)
(72) Erfinder: Aschauer, Rudolf, 1020 Wien (AT); Burian, Robert, 1210 Wien (AT); Dorn, Christoph, 1090 Wien (AT); Ploninger, Christian, 1210 Wien (AT)

(56) Entgegenhaltungen:
- EP-A- 1 320 214
- WO-A-01/76154
- DE-A1- 10 214 985
- US-A1- 2004 087 274

## Beschreibung

Die Erfindung betrifft ein Datenverarbeitungsgerät zum Einsatz in einem Ad-hoc-Netzwerk gemäß des Oberbegriffs des Patentanspruchs 1 und ein Ad-hoc-Netzwerk.

WO 01/76154 (ERICSSON) beschreibt so ein Netzwerk.

Datenverarbeitungsgeräte werden in Netzwerken angeordnet bzw. an Netzwerken angeschlossen, damit Informationen (Daten) zwischen den Datenverarbeitungsgeräten der Netzwerke ausgetauscht werden können. Die Datenverarbeitungsgeräte (Computer, PDAs, Server, Drucker, Gateways, etc.), auch die als Datenverarbeitungsgeräte ausgebildeten Kommunikations-Komponenten (Telefone, VoIP-Telefone, Vermittlungssysteme, etc.), weisen dabei jeweils eine eindeutige Adresse auf, wobei anhand dieser Adressen jedes Netzelement (Datenverarbeitungsgerät) mit einem anderen Netzwerkelement im dem gleichen Netzwerk Informationen austauschen kann.

In Netzwerken sind neben den Datenverarbeitungsgeräten häufig zentrale Dienste, die oft auch als "Server" bezeichnet werden bzw. auf "Servern" installiert sind, angeordnet, wobei die zentralen Dienste von Anwendungen, die auf den einzelnen Datenverarbeitungsgeräten installiert sind, genutzt werden. Dabei werden zwischen einem solchen zentralen Dienst und einer den zentralen Dienst nutzenden Anwendung Informationen ausgetauscht. Üblicher Weise steht ein- und derselbe zentrale Dienst mehreren Anwendungen und damit mehreren Datenverarbeitungsgeräten zur Nutzung zur Verfügung, beispielsweise werden in einem als zentralen Dienst ausgeführten E-Mail-Server alle elektronischen Nachrichten (E-Mails, etc.) gespeichert und vermittelt, die von den Anwendungen (in diesem Fall sind das E-Mail-Programme) der angeschlossenen Datenverarbeitungsgeräte ausgetauscht werden.

Ein Sonderfall der beschriebenen Netzwerke sind die sog. "Ad-hoc-Netzwerke", wobei die in einem Ad-hoc-Netzwerk angeordneten Datenverarbeitungsgeräte häufig wechseln. Ein Beispiel für ein solches Ad-hoc-Netzwerk sind die sog. "WLAN-Hot-Spots", bei denen alle Datenverarbeitungsgeräte, die sich innerhalb der Funkreichweite der Sende-/Empfangseinrichtung befinden, Teil des Ad-hoc-Netzwerks sein können. Datenverarbeitungsgeräte, insbesondere solche mit einem drahtlosen Anschluss zur Datenübertragung, können dabei auch ohne eine zentrale Infrastruktur ("Hot-Spot") ein Ad-hoc-Netzwerk bilden, sobald zumindest zwei Datenverarbeitungsgeräte miteinander in Verbindung treten bzw. Informationen austauschen können. Ein weiteres Beispiel für die Ad-hoc-Netzwerke stellen die sog. Peer-to-Peer-Netzwerke dar, bei denen einige (zumindest zwei) Datenverarbeitungsgeräte eines beliebig großen Netzwerks (z. B. das Internet) in eine logische Beziehung zueinander treten. Solche Peer-to-Peer-Netzwerke werden beispielsweise häufig zum Dateiaustausch verwendet, oder aber auch für die Sprachdatenkommunikation ("VoIP-Telefonie"), ohne dabei ein leitungsvermitteltes Netzwerk (Telefonnetzwerk) zu verwenden.

Bei den Ad-hoc-Netzwerken hat sich als nachteilig erwiesen, dass die üblicher Weise verwendeten und auf den Datenverarbeitungsgeräten installierten Anwendungen mit einer Datenschnittstelle für einen zentralen Dienst oder für wenige zentralen Diensten ausgerüstet sind. Wenn ein solches Datenverarbeitungsgerät mit einer solchen Anwendung in ein (anderes) Ad-hoc-Netzwerk eingebracht wird, kann die Anwendung in diesem Ad-hoc-Netzwerk nur dann erfolgreich betrieben werden, wenn in diesem Ad-hoc-Netzwerk ein entsprechender zentraler Dienst verfügbar bzw. erreichbar ist. Im Beispiel der E-Mail-Server heißt das, dass alle E-Mail-Anwendungen in dem Ad-hoc-Netzwerk eine Verbindung zu einem E-Mail-Server haben müssen, wobei verständlicher Weise sichergestellt sein muss, dass in dem jeweiligen Ad-hoc-Netzwerk überhaupt ein solcher E-Mail-Server vorhanden bzw. erreichbar ist.

Aufgabe der Erfindung ist es, die Funktion der für einen zentralen Dienst vorgesehenen Anwendungen in Ad-hoc-Netzwerken sicherzustellen oder zu verbessern.

Die Aufgabe wird für das Datenverarbeitungsgerät durch die Merkmale des Patentanspruchs 1 und für das Ad-hoc-Netzwerk durch die Merkmale des Patentanspruchs 15 gelöst.

Die Lösung sieht ein Datenverarbeitungsgerät zum Einsatz in einem Ad-hoc-Netzwerk vor, mit einer Anwendung zur Verarbeitung von ersten Informationen, wobei die Anwendung für die Verarbeitung der ersten Informationen mit einer Datenschnittstelle für einen zentralen Dienst ausgestattet ist. Das Datenverarbeitungsgerät ist mit einer Stellvertreter-Instanz ausgestattet, wobei die Stellvertreter-Instanz zum Austausch der ersten Informationen über eine erste Datenverbindung mit der Anwendung verbunden ist, die Stellvertreter-Instanz zum Austausch zweiter Informationen über das Ad-hoc-Netzwerk über zweite Datenverbindungen mit mehreren weiteren Datenverarbeitungsgeräten verbunden ist, die Stellvertreter-Instanz zur Bildung der ersten Informationen aus den zweiten Informationen und zur Bildung der zweiten Informationen aus den ersten Informationen ausgebildet ist, und der Austausch der ersten Informationen zwischen der Anwendung und der Stellvertreter-Instanz mittels der Datenschnittstelle erfolgt. Die auf dem Datenverarbeitungsgerät installierte Anwendung kann somit auch in solchen Ad-hoc-Netzwerken betrieben werden, in denen der entsprechende zentrale Dienst nicht oder noch nicht verfügbar ist.

Die Lösung sieht weiter ein Ad-hoc-Netzwerk vor, in dem zumindest ein erstes und ein zweites der zuvor beschriebenen Datenverarbeitungsgeräte angeordnet sind, wobei die Anwendung des ersten Datenverarbeitungsgerätes zum Austausch von Informationen mit der Stellvertreter-Instanz des zweiten Datenverarbeitungsgerätes ausgebildet ist. In einem solchen Ad-hoc-Netzwerk kann also die Stellvertreter-Instanz des zweiten Datenverarbeitungsgerätes für die Anwendung des ersten Datenverarbeitungsgerätes die Funktionalität des zentralen Dienstes zur Verfügung stellen. Wenn der Austausch dabei über die erste Stellvertreter-Instanz erfolgt, bildet diese dann den zentralen Dienst für die erste Anwendung, sodass in diesem Fall auch bei einem Wechsel des Datenverarbeitungsgerätes in ein anderes Ad-hoc-Netzwerk eine bestehende Anmeldung der ersten Anwendung bei dem (durch die erste Stellvertreter-Instanz gebildeten) Dienst fortbestehen kann.

Vorteilhafte Ausgestaltungen des Datenverarbeitungsgerätes ergeben sich aus den Merkmalen der abhängigen Patentansprüche 2 bis 14. Die dabei beschriebenen Merkmale und Vorteile gelten sinngemäß auch für das erfindungsgemäße Ad-hoc-Netzwerk.

Wenn der zentrale Dienst ein Dienst für elektronische Nachrichten ist und die ersten Informationen elektronische Nachrichten sind, kann ein Benutzer des Datenverarbeitungsgerätes mit der gewohnten Anwendung elektronische Nachrichten auch in solchen Netzwerken austauschen, in denen kein zentraler Dienst (zentraler Server) für elektronische Nachrichten erreichbar ist.

Wenn die Stellvertreter-Instanz zum Weiterleiten der als erste Informationen von der Anwendung empfangenen elektronischen Nachrichten zu zumindest einem der weiteren Datenverarbeitungsgeräte ausgebildet ist, wobei die empfangene elektronische Nachricht eine Adresse des zumindest einen weiteren Datenverarbeitungsgerätes umfasst und durch die Stellvertreter-Instanz die Weiterleitung an das durch diese Adresse definierte Datenverarbeitungsgerät erfolgt, können die Datenverarbeitungsgeräte in dem Ad-hoc-Netzwerk mittels der gewohnten, für einen zentralen Server (zentralen Dienst) eingerichteten Anwendung elektronische Nachrichten untereinander austauschen, ohne zuvor eine Verbindung zu einem zentralen Dienst aufzubauen. Dabei ist die Stellvertreter-Instanz vorteilhaft zum Zwischenspeichern auszutauschender elektronischer Nachrichten ausgebildet, wodurch auch solche Anwendungen, die einen zentralen Dienst (Server) als Informationsspeicher benötigen, unverändert weiter betrieben werden können. Dabei ergibt sich eine umfassende Funktionalität, wenn die elektronischen Nachrichten E-Mail-Nachrichten, TelefaxNachrichten, Terminelemente oder Kalendereinträge sind.

Wenn die Anwendung eine Einrichtung zum Zugriff auf eine Ressource ist, wobei über zumindest eine der zweiten Datenverbindungen die Ressource durch zumindest eines der weiteren Datenverarbeitungsgeräte verwendbar ist, kann ein- und dieselbe Ressource mehreren oder allen Datenverarbeitungsgeräten in dem Ad-hoc-Netzwerk zur Verfügung gestellt werden. Das ist besonders vorteilhaft, wenn die durch das zumindest eine weitere Datenverarbeitungsgerät verwendbare Ressource ein Drucker oder ein Netzwerkzugang (Router, Gateway) ist, weil diese Ressourcen dann nicht separat für jedes Datenverarbeitungsgerät geschaffen werden müssen, sondern abwechselnd oder zeitgleich von mehreren Datenverarbeitungsgeräten genutzt werden können. Dabei ist die Stellvertreter-Instanz vorteilhaft mit einer Autorisierungseinrichtung versehen, wobei die Autorisierungseinrichtung zur Freigabe und/oder zur Sperrung der über die Anwendung zugreifbaren Ressource für zumindest eines der weiteren Datenverarbeitungsgeräte ausgebildet ist. Durch eine solche Autorisierungseinrichtung kann zum einen die missbräuchliche Verwendung von Ressourcen vermieden werden, und zum anderen die Nutzung kostenpflichtiger Ressourcen nur solchen Datenverarbeitungsgeräten bzw. deren Anwendungen gestattet werden, bei denen die Zahlung von Nutzungsentgelten sichergestellt ist.

Ein Benutzer des Datenverarbeitungsgerätes kann sich über den Zustand der weiteren Datenverarbeitungsgeräte bzw. über die Erreichbarkeit derer Benutzer informieren, wenn die Anwendung zur Verarbeitung von Presence-Informationen zumindest eines der weiteren Datenverarbeitungsgeräte ausgebildet ist, und die Stellvertreter-Instanz zum Empfangen der Presence-Informationen als zweite Informationen über zumindest eine der zweiten Datenverbindungen von zumindest einem der weitere Datenverarbeitungsgeräte und zur Weiterleitung der Presence-Informationen als erste Informationen zu der Anwendung eingerichtet ist. Dabei ist vorteilhaft die Anwendung zur Generierung von Presence-Informationen über das Datenverarbeitungsgerät und/oder eines Benutzers des Datenverarbeitungsgerätes als erste Informationen ausgebildet, und die Stellvertreter-Instanz zum Versenden der generierten Presence-Informationen als zweite Informationen über zumindest eine der zweiten Datenverbindungen zu zumindest einen der weiteren Datenverarbeitungsgeräte eingerichtet. Dadurch kann die Stellvertreter-Instanz die Presence-Informationen für die weiteren Datenverarbeitungsgeräte bzw. deren Benutzer erzeugen und versenden, so dass die Anwendungen der weiteren Datenverarbeitungsgeräte auch ohne Zugriff auf einen zentralen Presence-Server (zentraler Dienst) betrieben werden können. Dabei können gebräuchliche und häufig bereits vorhandene Anwendungen weiter betrieben werden, wenn die Anwendungen zum Austausch der Presence-Informationen als erste Informationen gemäß des SIP-Protokolls eingerichtet sind, und zumindest eine der Stellvertreter-Instanzen eine SIP-Presence-Registrierungsfunktion und eine SIP-Presence-Server-Funktion aufweist.

Wenn die Anwendung eine Anzeigefunktion oder eine Verarbeitungsfunktion für Adressen umfasst, und die Stellvertreter-Instanz zur Übertragung der Adresse zumindest eines der weiteren Datenverarbeitungsgeräte als erste Informationen zu der Anwendung ausgebildet ist, kann ein Benutzer der Anwendung durch Zugriff auf die Anzeigefunktion bzw. auf die Verarbeitungsfunktion auf die Adresse des zumindest einen weiteren Datenverarbeitungsgerätes zugreifen, ohne dass diese Adresse manuell in die Anwendung übertragen werden muss. Die Administration vereinfacht sich weiter, indem die Stellvertreter-Instanz zum Abruf der an die Anwendung zu übertragenen Adresse als zweite Informationen von den zumindest einen weiteren Datenverarbeitungsgerät eingerichtet ist, wodurch auch neu in das Ad-hoc-Netzwerk eingebrachte Datenverarbeitungsgeräte automatisch mit ihren Adressen durch die Anwendung zugegriffen werden können. Dabei ist vorteilhaft die Anwendung ein Anzeige- und Verarbeitungsprogramm für elektronische Nachrichten, wobei dann idealer Weise die Adresse zum Versenden elektronischer Nachrichten verwendbar ist.

Ausführungsbeispiele für ein erfindungsgemäßes Datenverarbeitungsgerät werden nachfolgend anhand der Zeichnungen erläutert und dienen gleichzeitig der Erläuterung von Ausführungsbeispielen erfindungsgemäßer Ad-hoc-Netzwerke. Dabei zeigt:
- Figur 1: ein Netzwerk mit drei Datenverarbeitungsgeräten,
- Figur 2: ein Datenverarbeitungsgerät mit einer elektronischen Nachrichtenanwendung und einer Stellvertreter-Instanz mit einer Mail-Proxy-Komponente und einer Mail-Queue,
- Figur 3: ein Netzwerk mit drei Datenverarbeitungsgeräten, zwei Ressourcen und einem weiteren Netzwerk, und
- Figur 4: zwei Datenverarbeitungsgeräte mit Anwendungen zum Austausch von Presence-Informationen in einem Netzwerk.

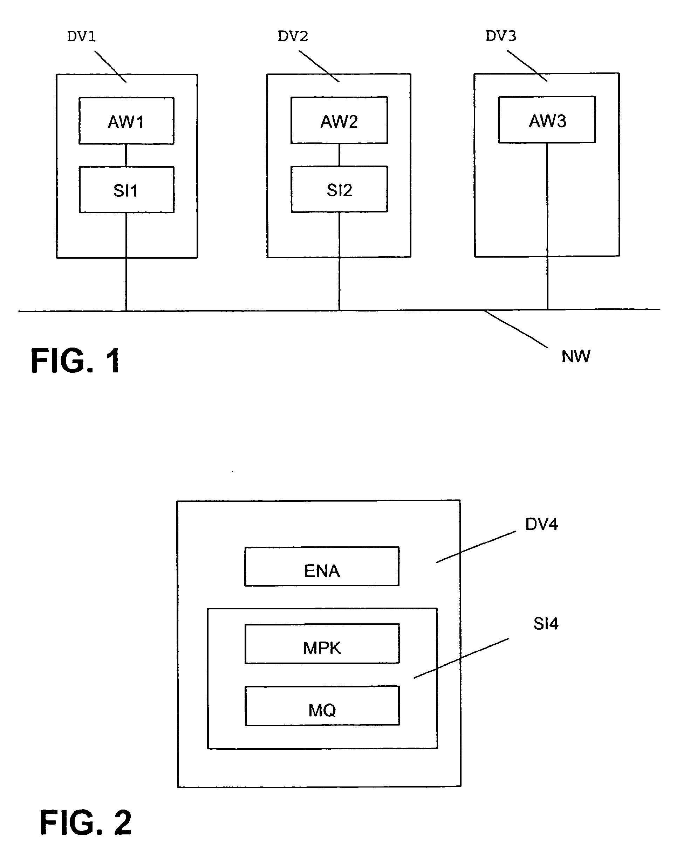

In der Figur 1 sind die Datenverarbeitungsgeräte DV1, DV2, DV3 gezeigt, welche in einem Ad-hoc-Netzwerk NW angeordnet sind und über dieses Ad-hoc-Netzwerk NW Informationen (Daten) untereinander übertragen (austauschen) können. Im vorliegenden Ausführungsbeispiel ist das Ad-hoc-Netzwerk NW ein sog. Wireless-LAN, also ein auf Funktechnologie basierendes Netzwerk. Die gezeigten Datenverarbeitungsgeräte DV1, DV2, DV3 können dabei Informationen direkt miteinander austauchen, ohne dass es einer zentralen Instanz (Router, Netzknoten etc.) bedarf. Alternativ zu dem gezeigten schnurlosen Ad-hoc-Netzwerk NW kann selbstverständlich auch ein drahtgebundenes Netzwerk eingesetzt werden. Das besondere Kennzeichnen des Ad-hoc-Netzwerks NW ist, dass alle die Datenverarbeitungsgeräte DV1, DV2, DV3, die gerade "zufällig" einander gemäß ihrer Funkreichweite erreichen können bzw. in der gleichen Funkzelle angeordnet sind, Teil des Ad-hoc-Netzwerks NW sind bzw. dieses bilden. Die erfindungsgemäßen Datenverarbeitungsgeräte DV1, DV2, DV3 können selbstverständlich auch alternativ in einem Nicht-Ad-hoc-Netzwerk betrieben werden; in diesem Fall ist ggf. eine Anmeldung bei einem zu verwendenden Netzknoten erforderlich.

Die gezeigten Datenverarbeitungsgeräte DV1, DV2, DV3 sind jeweils mit einer Anwendung AW1, AW2, AW3 versehen, wobei die Datenverarbeitungsgeräte DV1, DV2 mit je einer Stellvertreter-Instanz SI1, SI2 ausgestattet sind. Prinzipiell sind auch die in den Figuren 2 bis 4 beschriebenen Datenverarbeitungsgeräte DV4, DV5, DV6, DV7, DV8, DV9 sowie die dabei gezeigten Netzwerke NW2, NW3, NW4 analog zu den zuvor beschriebenen Datenverarbeitungsgeräten DV1, DV2, DV3 bzw. zu dem Ad-hoc-Netzwerk NW aufgebaut. Sofern die nachfolgend beschriebenen Datenverarbeitungsgeräte und Komponenten nicht abweichend beschrieben sind, gelten für diese die zuvor beschriebenen Merkmale und Eigenschaften.

Im Folgenden wird anhand des in der Figur 2 schematisch dargestellten Datenverarbeitungsgerätes DV4 der Betrieb einer Anwendung ENA für den Austausch elektronischer Nachrichten in einem Ad-hoc-Netzwerk erläutert. Die Anwendung ENA ist ein sog. "Mail-Client", also ein Anwendungsprogramm, welches eine Benutzeroberfläche zum Versenden und zum Empfangen elektronischer Nachrichten bereitstellt, wobei zu den elektronischen Nachrichten nicht nur die bekannten E-Mails zählen, sondern auch Termin- und Kalendereinträge, Telefaxnachrichten, Sprachdateien (insbesondere aus sog. "Unified Messaging" Systemen) etc.. Im vorliegenden Ausführungsbeispiel handelt es sich dabei um das Programm Microsoft Outlook; selbstverständlich kann auch ein anderes derartiges Anwendungsprogramm verwendet werden.

Die Anwendung ENA ist derart ausgestaltet, dass sie die elektronischen Nachrichten mit einem zentralen Dienst, im vorliegenden Ausführungsbeispiel dem sog. Microsoft-Exchange-Server, austauscht. Ein solcher zentraler Dienst bildet dabei die Grundlage für eine Vielzahl ähnlicher oder identischer Anwendungen nach Art der Anwendung ENA. Die Anwendung ENA ist dabei mit einer Datenschnittstelle ausgerüstet, die zum Austausch von Informationen (Daten) über ein Netzwerk mit dem zentralen Dienst vorgesehen ist. Dazu ist in dem "serverbasierten" Anwendungsfall die Datenschnittstelle direkt, z.B. mittels eines Datenkanals, mit dem zentralen Dienst verbunden.

Das Datenverarbeitungsgerät DV4 ist mit einer Stellvertreter-Instanz SI4 ausgerüstet, welche über die Datenschnittstelle mit der Anwendung ENA verbunden ist. Die Anwendung ENA tauscht also Informationen (Daten) nun über die Datenschnittstelle mit der Stellvertreter-Instanz SI4 aus, anstatt die Informationen mit dem (im betrachteten Ad-hoc-Netzwerk nicht vorhandenen) zentralen Dienst auszutauschen.

Das Datenverarbeitungsgerät DV4 weist - wie alle in den Ausführungsbeispielen gezeigten Datenverarbeitungsgeräte - eine Suchfunktion zum Auffinden anderer Datenverarbeitungsgeräte des Ad-hoc-Netzwerks auf. Solche Suchfunktionen sind aus sog. Peer-to-Peer-Netzwerken bekannt und werden an dieser Stelle nicht näher beschrieben. Aufgrund einer wiederholt durchgeführten Suche nach anderen Datenverarbeitungsgeräten liegen in dem Datenverarbeitungsgerät DV4 die Adressen (Netzwerkadressen) anderer Datenverarbeitungsgeräte vor, die ebenfalls mit einer Stellvertreter-Instanz nach Art der Stellvertreter-Instanz SI4 und mit einer Anwendung nach Art oder ähnlich der Anwendung ENA ausgerüstet sind. Dadurch liegen in der Stellvertreter-Instanz SI4 die Kommunikationsadressen (Netzwerkadressen) der anderen Datenverarbeitungsgeräte sowie die Zugangsparameter der dort installierten Stellvertreter-Instanzen (sofern vorhanden) vor.

Ein Benutzer der Anwendung ENA verfasst nun eine elektronische Nachricht, beispielsweise eine E-Mail-Nachricht oder eine Terminanfrage, und aktiviert an der Anwendung ENA die Funktion "Senden". Damit überträgt die Anwendung ENA die elektronische Nachricht als erste Informationen zu der Stellvertreter-Instanz SI4, wo die elektronische Nachricht durch das Modul MPK ("Mail-Proxy-Komponente") empfangen wird. Dabei tauscht das Modul MPK mit der Anwendung ENA die ersten Informationen auf die gleiche Art und Weise aus, in der es auch ein (hier nicht vorhandener) zentraler Dienst macht. Das Modul MPK entscheidet nun, ob das Datenverarbeitungsgerät DV4 derzeit Teil eines Netzwerks (Ad-hoc-Netzwerk) ohne einen zentralen Dienst zur Verarbeitung elektronischer Nachrichten, oder Teil eines Netzwerks ist, in dem ein solcher zentraler Dienst verfügbar ist. Im vorliegenden Ausführungsbeispiel ist ein zentraler Dienst nicht in dem Netzwerk erreichbar, so dass das Modul MPK die elektronische Nachricht an eine weiteres Modul MQ "Mail-Queue") weiterleitet; anderenfalls würde der zentrale Dienst verwendet.

Hier wird die elektronische Nachricht zwischengespeichert und anhand der in der elektronischen Nachricht enthaltenen Empfängeradresse überprüft, ob der gewünschte Empfänger ein Benutzer einer anderen in dem Netzwerk erreichbaren Anwendung zum Austausch elektronischer Nachrichten ist. In den Fällen, in denen dies nicht der Fall ist, speichert das Modul MQ die elektronische Nachricht so lange, bis entweder eine dem gewünschten Empfänger zugeordnete Anwendung in dem Netzwerk erreichbar ist, oder bis ein entsprechender zentraler Dienst (Mail-Server) erreichbar ist. Im vorliegenden Ausführungsbeispiel ist jedoch eine Weiterleitung der elektronischen Nachricht an ein anderes Datenverarbeitungsgerät möglich. Deswegen wird die elektronische Nachricht durch die Stellvertreter-Instanz SI4 in zweite Informationen umgesetzt, wobei für diese Umsetzung die elektronische Nachricht mit den Adressinformationen des weiteren Datenverarbeitungsgerätes versehen wird. Die elektronische Nachricht wird nun über das Netzwerk zu dem weiteren Datenverarbeitungsgerät übermittelt, von der dortigen Stellvertreter-Instanz empfangen, zwischengespeichert und, falls nötig, in das Datenformat der dortigen Anwendung umgesetzt. Danach kann die elektronische Nachricht von der dortigen Anwendung aus dem Zwischenspeicher der dortigen Stellvertreter-Instanz abgerufen werden.

Alternativ kann die auf dem weiteren Datenverarbeitungsgerät installierte Anwendung auch direkt Daten mit der Stellvertreter-Instanz SI4 des Datenverarbeitungsgerätes DV4 austauschen. Dann ist die weitere Anwendung als "Client" in der gleichen Weise wie die Anwendung ENA bei der Stellvertreter-Instanz SI4 zu registrieren.

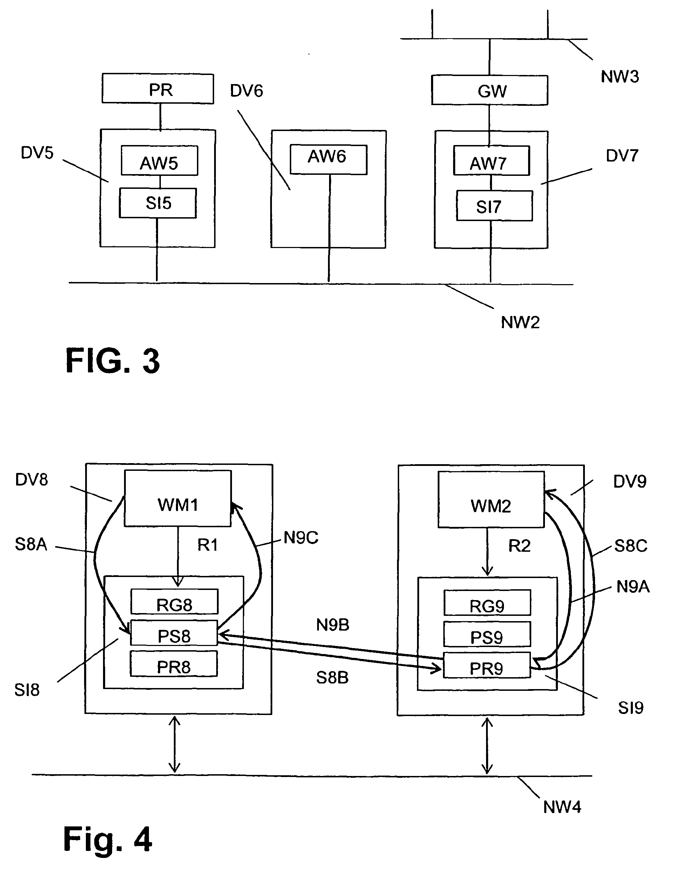

In Netzwerken sind häufig Ressourcen verfügbar, wobei solche Ressourcen an einem Datenverarbeitungsgerät angeschlossen und von zumindest einer Anwendung aus dem angeschlossenen Datenverarbeitungsgerät verwendbar sind. Die Figur 3 zeigt ein Netzwerk NW2, in welchem die Datenverarbeitungsgeräte DV5, DV6, DV7 angeordnet sind. An dem Datenverarbeitungsgerät DV5 ist die Ressource PR angeschlossen (PR = "Printer"), wobei diese Ressource von der Anwendung AW5 (hier: ein sog. Druckertreiber) verwendet wird. An dem Datenverarbeitungsgerät DV7 ist die Ressource GW (GW = Gateway) angeschlossen, wobei die Ressource GW den Informations-Übergang zu einem weiteren Netzwerk NW3 ermöglicht. Die Ressource GW wird dabei auf Seiten des Netzwerks NW 2 von der Anwendung AW7 des Datenverarbeitungsgerätes DV7 benutzt. Dabei ist die Anwendung AW7 ein sog. "Treiber", der zum Zusammenwirken mit einem zentralen Dienstleistungsprogramm, in diesem Fall einer sog. Gateway-Server-Software, ausgebildet ist.

Im Folgenden wird beschrieben, in welcher Weise die auf dem Datenverarbeitungsgerät DV6 installierte Anwendung AW6 (ein Textverarbeitungsprogramm) die Ressource PR (Drucker), welche an das Datenverarbeitungsgerät DV5 angeschlossen ist, verwendet.

Das Betriebssystem des Datenverarbeitungsgerätes DV6 sucht über die Verbindungen mit dem Netzwerk NW2 in diesem nach einem zentralen Dienst "Print-Server", also nach einem netzgestützten Dienst zum Ausdruck von Dokumenten. Eine solche dabei ausgesendete Suchmeldung wird von der Stellvertreter-Instanz SI5 empfangen, bei der die Anwendung AW5 (Druckertreiber) mit der dadurch verfügbaren Ressource PR (Drucker) verbunden ist. Die Stellvertreter-Instanz SI5 beantwortet daher die Suchmeldung, so dass sie bei der Anwendung AW6 als "Drucker-Server" registriert wird. Zum Ausdrucken eines Dokumentes versendet die Anwendung AW6 über das Netzwerk NW2 das Dokument als zweite Informationen zu der Stellvertreter-Instanz SI5, wobei das Dokument dort empfangen und in erste Informationen umgesetzt wird. Bei dieser Umsetzung wird das Dokument in ein internes Datenformat des Datenverarbeitungsgeräte DV5 umgesetzt, so dass das zu druckende Dokument von einer Datenschnittstelle der Anwendung AW5 in der gleichen Weise empfangen wird, als wäre die Anwendung AW6 ein auf dem Datenverarbeitungsgerät DV5 installiertes Textverarbeitungsprogramm. In der Folge wird das Dokument durch die Anwendung AW5 über die Ressource PR ausgedruckt. Selbstverständlich werden dabei entstehende Statusmeldungen der Ressource PR über den gleichen Weg zu der Anwendung AW6 zurück übertragen.

Nachfolgend wird angenommen, dass die Anwendung AW6 eine Kommunikationsanwendung für ein Sprachdatennetz (VoIP-Netzwerk) ist. Analog zu dem zuvor beschriebenen Beispiel kann dann die Anwendung AW6 über die Stellvertreter-Instanz SI7 und die Anwendung AW7 die Ressource GW für Kommunikationsverbindungen mit Kommunikationspartnern in dem Netzwerk NW3 verwenden. Die Stellvertreter-Instanz SI7 ist dabei ein sog. "Proxy", der in dem Datenverarbeitungsgerät DV7 anstelle einer lokal installierten Anwendung die Anwendung AW7 und damit die Ressource GW verwendet. Die Stellvertreter-Instanz SI7 "terminiert" dabei die Verbindungen, die von der Anwendung AW6 über das Netzwerk NW2 zu dem Kommunikationspartner verlaufen. Die über diese Verbindung ausgetauschten zweiten Informationen (Nutzdaten) werden durch die Stellvertreter-Instanz SI7 umgesetzt in einen weiteren Datenstrom (weitere Verbindung), die über die Anwendung AW7 und die Ressource GW zu dem Kommunikationspartner in dem Netzwerk NW3 führt. Selbstverständlich ist die Benutzung der Stellvertreter-Instanz SI7 abhängig von einer zuvor erfolgten Authentifizierung, mit deren Hilfe sichergestellt ist, dass die Anwendung AW6 zur Benutzung der Ressource GW berechtigt ist.

Jetzt wird anhand der Figur 4 erläutert, in welcher Weise die Datenverarbeitungsgeräte DV8, DV9 des Netzwerks NW4 ohne einen zentralen "Presence-Server" Anwesenheitsinformationen untereinander austauschen. Die Anwendungen WM1, WM2 sind dabei Anwendungen, die zur Verarbeitung und Anzeige von Anwesenheitsinformationen eingerichtet sind, die diese jeweils als erste Informationen mit einem zentralen Dienst (Presence-Server) austauschen. Anstelle mit dem zentralen Dienst sind die Anwendungen WM1, WM2 - es handelt sich in diesem Ausführungsbeispiel um den bekannten "Microsoft Windows-Messenger" - mit jeweils einer Datenschnittstelle mit den Stellvertreter-Instanzen SI8, SI9 verbunden. Die über die Datenschnittstellen ausgetauschten ersten Informationen werden dabei im vorliegenden Ausführungsbeispiel jeweils gemäß des SIP-Protokolls ausgetauscht. Analog zu einem SIP-konformen zentralen Dienst (der hier nicht vorhanden ist) weisen die Stellvertreter-Instanzen SI8, SI9 jeweils einen SIP-Registrar RG8, RG9, einen (internen) SIP-Presence-Server PS8, PS9 und einen sog. SIP-Proxy PR8, PR9 auf.

Im Folgenden sei angenommen, dass die Datenverarbeitungsgeräte DV8, DV9 nach ihrem Start jeweils eine Suche nach anderen, gleichartigen Datenverarbeitungsgeräten durchgeführt haben und jeweils im Besitz der Kommunikationsadresse (Zugangsparameter) des jeweils anderen dargestellten Datenverarbeitungsgerätes DV8, DV9 sind.

In einem ersten Schritt registriert sich die Anwendung WM1 bei dem SIP-Registrar RG8 und die Anwendung WM2 bei dem SIP-Registrar RG9. Während bei Vorhandensein eines zentralen Dienstes (zentraler Presence-Server) sich jede Anwendung WM1, WM2 bei dem SIP-Registrar des (einen) zentralen Dienstes anmeldet, stellt die Stellvertreter-Instanz SI8 für die Anwendung WM1 diesen zentralen Dienst dar, während die Stellvertreter-Instanz SI9 für die Anwendung WM2 den zentralen Dienst (zentraler Presence-Server) bildet.

Für dieses Ausführungsbeispiel sei angenommen, dass mittels der Anwendung WM1 der Presence-Zustand eines Benutzers der Anwendung WM2 überwacht werden soll, also festgestellt werden soll, ob beispielsweise der Benutzer der Anwendung WM2 über die Anwendung WM2 erreichbar ist, oder nicht. Um die Anwendung WM2 zu überwachen, sendet die Anwendung WM1 über ihre Datenschnittstelle eine Meldung "Subscribe" S8A an den SIP-Presence-Server PS8 der Stellvertreter-Instanz SI8. Die "Subscribe"-Meldung S8A ist dabei an die Stellvertreter-Instanz SI8 adressiert und liegt somit als erste Information en in einem ersten Datenformat vor. Sie wird durch die Stellvertreter-Instanz SI8 in zweite Informationen umgewandelt, indem diese an das Datenverarbeitungsgerät DV9 (um-)adressiert wird, und wird dann über das Netzwerk NW4 an den SIP-Proxy-PR9 versendet. Der SIP-Proxy PR9 stellt für den SIP-Presence-Server PS8 die zu überwachende Anwendung WM2 stellvertretend dar und empfängt die umgewandelte "Subscribe"-Meldung S8A als "Subscribe"-Meldung S8B. Die Stellvertreter-Instanz SI9 erkennt, dass die "Subscribe"-Meldung S8B die Anwendung WM2 betrifft, adressiert diese an die "interne" Anwendung WM2 und leitet sie als "Subscribe"-Meldung S8C an diese weiter.

Die Anwendung WM2 prüft, ob die anfragende Anwendung WM1 zur Überwachung ihres Zustandes authorisiert ist und meldet fortan jede Zustandsänderung, indem sie jeweils eine entsprechende "Notify"-Meldung N9A zu demjenigen SIP-Proxy-PR9 versendet, von welchem die Anwendung WM2 die Subscribe-Meldung S8C erhalten hat. Eine solche von dem SIP-Proxy-PR9 empfangene "Notify"-Meldung N9A wird von dem SIP-Proxy-PR9 ausgewertet, wobei festgestellt wird, dass es sich bei dieser "Notify"-Meldung N9A um eine Antwortmeldung auf die "Subscribe"-Meldung S8B des Presence-Servers PS8 handelt. Dem entsprechend wird die "Notify"-Meldung N9A umgesetzt (neu adressiert) und als "Notify"-Meldung N9B zu dem Presence-Server PS8 übermittelt. Dort wird der entsprechend geänderte Zustand der Anwendung WM2 registriert und aufgrund der früher empfangenen "Subscribe"-Meldung S8A in eine "Notify"-Meldung N9C umgesetzt, welche an die Anwendung WM1 versendet und dort angezeigt bzw. verarbeitet wird.

In einer weiteren Ausführungsform ist die Stellvertreter-Instanz SI8 derart ausgebildet, dass in Netzwerken, in denen ein zentraler Presence-Dienst vorhanden ist, der "interne" Presence-Server PS8 nicht verwendet wird, sondern die ihn erreichende Meldungen der Anwendung WM1 an den dann vorhandenen zentralen Presence-Dienst weitergeleitet werden.

Wenn das Datenverarbeitungsgerät DV8 eine weitere (nicht dargestellte) Anwendung mit einem Adressverzeichnis trägt, beispielsweise nach Art der anhand der Figur 2 geschilderten Anwendung ENA, können durch die Stellvertreter-Instanz SI8 die Namen und die Kommunikationsadressen der Benutzer anderer Datenverarbeitungsgeräte (hier Datenverarbeitungsgerät DV9) mit Anwendung WM2) temporär in das Adressverzeichnis der jeweiligen Anwendung eingetragen werden. Damit ergibt sich "dynamisch" ein komfortabler Zugriff auf alle diejenigen Anwendungen und Benutzer, die über das Ad-hoc-Netzwerk derzeit erreichbar sind und zuvor über einen Presence-Dienst oder eine Suchfunktion aufgefunden wurden. Das betrifft auch diejenigen weiteren Datenverarbeitungsgeräte, die sich ohne Suche selbst bei dem Datenverarbeitungsgerät DV8 "angemeldet" haben.

## Patentansprüche

1. Datenverarbeitungsgerät (DV1 ... DV8) zum Einsatz in einem Ad-hoc-Netzwerk (NW, NW2, NW3, NW4),
mit einer Anwendung (AW1 ... AW7, WM1, WM2) zur Verarbeitung von ersten Informationen,
wobei die Anwendung (AW1 ... AW7, WM1, WM2) für die Verarbeitung der ersten Informationen mit einer Datenschnittstelle für einen zentralen Dienst ausgestattet ist,
**gekennzeichnet durch**
eine Stellvertreter-Instanz, wobei
• die Stellvertreter-Instanz (SI1 ... SI8) zum Austausch der ersten Informationen über eine erste Datenverbindung mit der Anwendung (AW1 ... AW7, WM1, WM2) verbunden ist,
• die Stellvertreter-Instanz (SI1 ... SI8) zum Austausch zweiter Informationen über das Ad-hoc-Netzwerk (NW, NW2, NW3, NW4) über zweite Datenverbindungen mit mehreren weiteren Datenverarbeitungsgeräten verbunden ist,
• die Stellvertreter-Instanz (SI1 ... SI8) zur Bildung der ersten Informationen aus den zweiten Informationen und zur Bildung der zweiten Informationen aus den ersten Informationen ausgebildet ist, und
• der Austausch der ersten Informationen zwischen der Anwendung (AW1 ... AW7, WM1, WM2) und der Stellvertreter-Instanz (SI1 ... SI8) mittels der Datenschnittstelle erfolgt.

2. Datenverarbeitungsgerät (DV1 ... DV8) nach Patentanspruch 1,
**dadurch gekennzeichnet, dass**
der zentrale Dienst ein Dienst für elektronische Nachrichten ist und die ersten Informationen elektronische Nachrichten sind.

3. Datenverarbeitungsgerät (DV1 ... DV8) nach Patentanspruch 2,
**dadurch gekennzeichnet, dass**
die Stellvertreter-Instanz (SI1 ... SI8) zum Weiterleiten der als erste Informationen von der Anwendung (AW1 ... AW7, WM1, WM2) empfangenen elektronischen Nachrichten zu zumindest einem der weiteren Datenverarbeitungsgeräte ausgebildet ist,
wobei die empfangene elektronische Nachricht eine Adresse des zumindest einen weiteren Datenverarbeitungsgerätes umfasst und durch die Stellvertreter-Instanz (SI1 ... SI8) die Weiterleitung an das durch diese Adresse definierte Datenverarbeitungsgerät (DV1 ... DV8) erfolgt.

4. Datenverarbeitungsgerät (DV1 ... DV8) nach Patentanspruch 2 oder 3,
**dadurch gekennzeichnet, dass**
die Stellvertreter-Instanz (SI1 ... SI8) zum Zwischenspeichern auszutauschender elektronischer Nachrichten ausgebildet ist.

5. Datenverarbeitungsgerät (DV1 ... DV8) nach einem der Patentansprüche 2 bis 4,
**dadurch gekennzeichnet, dass**
die Stellvertreter-Instanz (SI1...SI8) zur Verarbeitung von E-Mail-Nachrichten, Terminelementen oder Kalendereinträgen als die elektronischen Nachrichten ausgebildet ist.

6. Datenverarbeitungsgerät (DV1 ... DV8) nach Patentanspruch 1,
**dadurch gekennzeichnet, dass**
die Anwendung (AW1 ... AW7, WM1, WM2) eine Einrichtung zum Zugriff auf eine Ressource (PR, GW) ist,
wobei über zumindest eine der zweiten Datenverbindungen die Ressource (PR, GW) durch zumindest eines der weiteren Datenverarbeitungsgeräte verwendbar ist.

7. Datenverarbeitungsgerät (DV1 ... DV8) nach Patentanspruch 6,
**dadurch gekennzeichnet, dass**
die Stellvertreter-Instanz (SI1...SI8) derart ausgestaltet ist, dass die durch das zumindest eine weitere Datenverarbeitungsgerät (DV1 ... DV8) verwendbare Ressource (PR, GW) ein Drucker oder ein Netzwerkzugang sein kann.

8. Datenverarbeitungsgerät (DV1 ... DV8) nach einem der Patentansprüche 6 oder 7,
**dadurch gekennzeichnet, dass**
die Stellvertreter-Instanz (SI1 ... SI8) mit einer Authorisierungseinrichtung versehen ist, wobei die Authorisierungseinrichtung zur Freigabe und / oder zur Sperrung der über die Anwendung (AW1 ... AW7, WM1, WM2) zugreifbaren Ressource (PR, GW) für zumindest eines der weiteren Datenverarbeitungsgeräte ausgebildet ist.

9. Datenverarbeitungsgerät (DV8, DV9) nach Patentanspruch 1,
**dadurch gekennzeichnet, dass**
die Anwendung (WM1, WM2) zur Verarbeitung von Presence-Informationen zumindest eines der weiteren Datenverarbeitungsgeräte (DV8, DV9) ausgebildet ist, und
die Stellvertreter-Instanz (SI8, SI9) zum Empfangen der Presence-Informationen als zweite Informationen über zumindest eine der zweiten Datenverbindungen von zumindest einem der weiteren Datenverarbeitungsgeräte (DV8, DV9) und zur Weiterleitung der Presence-Informationen als erste Informationen zu der Anwendung (WM1, WM2) eingerichtet ist.

10. Datenverarbeitungsgerät (DV8, DV9) nach Patentanspruch 1 oder 9,
**dadurch gekennzeichnet, dass**
die Anwendung (WM1, WM2) zur Generierung von Presence-Informationen über das Datenverarbeitungsgerät (DV8, DV9) und / oder eines Benutzers des Datenverarbeitungsgerätes (DV8, DV9) als erste Informationen ausgebildet ist, und
die Stellvertreter-Instanz (SI8, SI9) zum Versenden der generierten Presence-Informationen als zweite Informationen über zumindest eine der zweiten Datenverbindungen zu zumindest einem der weiteren Datenverarbeitungsgeräte (DV8, DV9) eingerichtet ist.

11. Datenverarbeitungsgerät (DV8, DV9) nach Patentanspruch 9 oder 10,
**dadurch gekennzeichnet, dass**
die Anwendung (WM1, WM2) zum Austausch der Presence-Informationen als erste Informationen gemäß des SIP-Protokolls eingerichtet ist, und
die Stellvertreter-Instanz (SI8, SI9) eine SIP-Presence-Registrierungsfunktion (RG8, RG9) und eine SIP-Presence-Serverfunktion (PS8, PS9) aufweist.

12. Datenverarbeitungsgerät (DV1 ... DV8) nach Patentanspruch 1,
**dadurch gekennzeichnet, dass**
die Anwendung (AW1 ... AW7, WM1, WM2) eine Anzeigefunktion oder eine Verarbeitungsfunktion für Adressen umfasst, und
die Stellvertreter-Instanz (SI1 ... SI8) zur Übertragung der Adresse zumindest eines der weiteren Datenverarbeitungsgeräte als erste Informationen zu der Anwendung (AW1 ... AW7, WM1, WM2) ausgebildet ist.

13. Datenverarbeitungsgerät (DV1 ... DV8) nach Patentanspruch 12,
**dadurch gekennzeichnet, dass**
die Stellvertreter-Instanz (SI1 ... SI8) zum Abruf der an die Anwendung (AW1 ... AW7, WM1, WM2) zu übertragenden Adresse als zweite Informationen von dem zumindest einem weiteren Datenverarbeitungsgerät (DV1 ... DV8) eingerichtet ist.

14. Datenverarbeitungsgerät (DV1 ... DV8) nach Patentanspruch 12 oder 13,
**dadurch gekennzeichnet, dass**
die Anwendung (AW1 ... AW7, WM1, WM2) ein Anzeige- und Verarbeitungsprogramm für elektronische Nachrichten ist und die Adresse zum Versenden elektronischer Nachrichten verwendbar ist.

15. Ad-hoc-Netzwerk (NW, NW2, NW3, NW4),
**dadurch gekennzeichnet, dass**
in dem Ad-hoc-Netzwerk (NW, NW2, NW3, NW4) zumindest ein erstes und ein zweites Datenverarbeitungsgerät (DV1 ... DV8) nach einem der vorhergehenden Patentansprüche angeordnet sind,
wobei die Anwendung (AW1 ... AW7, WM1, WM2) des ersten Datenverarbeitungsgerätes zum Austausch von Informationen mit der Stellvertreter-Instanz (SI1 ... SI8) des zweiten Datenverarbeitungsgerätes ausgebildet ist.

16. Ad-hoc-Netzwerk (NW, NW2, NW3, NW4) nach Patentanspruch 15,
**dadurch gekennzeichnet, dass**
die Anwendung (AW1 ... AW7, WM1, WM2) des ersten Datenverarbeitungsgerätes zum Austausch der Informationen mittels der Stellvertreter-Instanz (SI1 ... SI8) des ersten Datenverarbeitungsgerätes eingerichtet ist.

17. Ad-hoc-Netzwerk (NW, NW2, NW3, NW4) nach Patentanspruch 15 oder 16,
**dadurch gekennzeichnet, dass**
die Anwendung (AW1 ... AW7, WM1, WM2) des zweiten Datenverarbeitungsgerätes zum Austausch von Informationen mit der Stellvertreter-Instanz (SI1 ... SI8) des ersten Datenverarbeitungsgerätes ausgebildet ist.

## Claims

1. Data processing device (DV1 ... DV8) for use in an ad-hoc network (NW, NW2, NW3, NW4),
having an application (AW1 ... AW7, WM1, WM2) for processing first information,
the application (AW1 ... AW7, WM1, WM2) for processing the first information being equipped with a data interface for a central service,
**characterized by**
a representative entity, where
• the representative entity (SI1 ... SI8) is connected to the application (AW1 ... AW7, WM1, WM2) via a first data link for the purpose of interchanging the first information,
• the representative entity (SI1 ... SI8) is connected to a plurality of further data processing devices via second data links for the purpose of interchanging second information via the ad-hoc network (NW, NW2, NW3, NW4),
• the representative entity (SI1 ... SI8) is designed to form the first information from the second information and to form the second information from the first information, and
• the first information is interchanged between the application (AW1 ... AW7, WM1, WM2) and the representative entity (SI1 ... SI8) using the data interface.

2. Data processing device (DV1 ... DV8) according to patent claim 1,
**characterized in that**
the central service is a service for electronic messages, and the first information is electronic messages.

3. Data processing device (DV1 ... DV8) according to patent claim 2,
**characterized in that**
the representative entity (SI1 ... SI8) is designed to forward the electronic messages received from the application (AW1 ... AW7, WM1, WM2) as first information to at least one of the further data processing devices, the received electronic message comprising an address for the at least one further data processing device, and the representative entity (SI1 ... SI8) effecting the forwarding to the data processing device (DV1 ... DV8) defined by this address.

4. Data processing device (DV1 ... DV8) according to patent claim 2 or 3,
**characterized in that**
the representative entity (SI1 ... SI8) is designed to buffer-store electronic messages which are to be interchanged.

5. Data processing device (DV1 ... DV8) according to one of patent claims 2 to 4,
**characterized in that**
the representative entity (SI1 ... SI8) is designed to process e-mail messages, appointment elements or calendar entries as the electronic messages.

6. Data processing device (DV1 ... DV8) according to patent claim 1,
**characterized in that**
the application (AW1 ... AW7, WM1, WM2) is an apparatus for accessing a resource (PR, GW),
where at least one of the second data links allows the resource (PR, GW) to be used by at least one of the further data processing devices.

7. Data processing device (DV1 ... DV8) according to patent claim 6,
**characterized in that**
the representative entity (SI1 ... SI8) is designed such that the resource (PR, GW) which can be used by the at least one further data processing device (DV1 ... DV8) may be a printer or a network access point.

8. Data processing device (DV1 ... DV8) according to either of patent claims 6 and 7,
**characterized in that**
the representative entity (SI1 ... SI8) is provided with an authorization apparatus, the authorization apparatus being designed to enable and/or disable the resource (PR, GW), which can be accessed via the application (AW1 ... AW7, WM1, WM2), for at least one of the further data processing devices.

9. Data processing device (DV1 ... DV8) according to patent claim 1,
**characterized in that**
the application (WM1, WM2) is designed to process presence information from at least one of the further data processing devices (DV8, DV9), and
the representative entity (SI8, SI9) is set up to receive the presence information as second information via at least one of the second data links from at least one of the further data processing devices (DV8, DV9) and to forward the presence information as first information to the application (WM1, WM2).

10. Data processing device (DV8, DV9) according to patent claim 1 or 9,
**characterized in that**
the application (WM1, WM2) is designed to generate presence information about the data processing device (DV8, DV9) and/or a user of the data processing device (DV8, DV9) as first information, and
the representative entity (SI8, SI9) is set up to send the generated presence information as second information via at least one of the second data links to at least one of the further data processing devices (DV8, DV9).

11. Data processing device (DV8, DV9) according to patent claim 9 or 10,
**characterized in that**
the application (WM1, WM2) is set up to interchange the presence information as first information on the basis of the SIP protocol, and
the representative entity (SI8, SI9) has an SIP presence registration function (RG8, RG9) and an SIP presence server function (PS8, PS9).

12. Data processing device (DV1 ... DV8) according to patent claim 1,
**characterized in that**
the application (AW1 ... AW7, WM1, WM2) comprises a display function or a processing function for addresses, and
the representative entity (SI1 ... SI8) is designed to transmit the address of at least one of the further data processing devices as first information to the application (AW1 ... AW7, WM1, WM2).

13. Data processing device (DV1 ... DV8) according to patent claim 12,
**characterized in that**
the representative entity (SI1 ... SI8) is set up to retrieve the address which is to be transmitted to the application (AW1 ... AW7, WM1, WM2) as second information from the at least one further data processing device (DV1 ... DV8).

14. Data processing device (DV1 ... DV8) according to patent claim 12 or 13,
**characterized in that**
the application (AW1 ... AW7, WM1, WM2) is a display and processing program for electronic messages, and the address can be used to send electronic messages.

15. Ad-hoc network (NW, NW2, NW3, NW4),
**characterized in that**
the ad-hoc network (NW, NW2, NW3, NW4) contains at least a first and a second data processing device (DV1 ... DV8) as claimed in one of the preceding patent claims,
the application (AW1 ... AW7, WM1, WM2) on the first data processing device being designed to interchange information with the representative entity (SI1 ... SI8) of the second data processing device.

16. Ad-hoc network (NW, NW2, NW3, NW4) according to patent claim 15,
**characterized in that**
the application (AW1 ... AW7, WM1, WM2) on the first data processing device is set up to interchange the information using the representative entity (SI1 ... SI8) of the first data processing device.

17. Ad-hoc network (NW, NW2, NW3, NW4) according to patent claim 15 or 16,
**characterized in that**
the application (AW1 ... AW7, WM1, WM2) on the second data processing device is designed to interchange information with the representative entity (SI1 ... SI8) of the first data processing device.

## Revendications

1. Appareil (DV1 ... DV8) de traitement de données pour réseau (NW, NW2, NW3, NW4) ad-hoc
comprenant une application (AW1 ... AW7, WM1, WM2) pour le traitement de premières informations,
l'application (AW1 ... AW7, WM1, WM2) pour le traitement des premières informations étant équipée d'une interface de données pour un service central, **caractérisé par**
une entité de représentation,
• l'entité (SI1 ... SI8) de représentation étant reliée à l'application (AW1 ... AW7, WM1, WM2) à l'aide d'une première liaison de données pour l'échange des premières informations,
• l'entité (SI1 ... SI8) de représentation étant reliée à plusieurs autres appareils de traitement de données à l'aide de deuxièmes liaisons de données pour l'échange de deuxièmes informations sur le réseau (NW, NW2, NW3, NW4) ad-hoc,
• l'entité (SI1 ... SI8) de représentation étant formée à partir des deuxièmes informations pour la formation des premières informations et à partir des premières informations pour la formation des deuxièmes informations, et
• l'échange des premières informations étant effectué entre l'application (AW1 ... AW7, WM1, WM2) et l'entité (SI1 ... SI8) de représentation au moyen de l'interface de données.

2. Appareil (DV1 ... DV8) de traitement de données suivant la revendication 1,
**caractérisé en ce que**
le service central est un service pour les messages électroniques et **en ce que** les premières informations sont des messages électroniques.

3. Appareil (DV1 ... DV8) de traitement de données suivant la revendication 2,
**caractérisé en ce que**
l'entité (SI1 ... SI8) de représentation est formée pour la transmission des messages électroniques reçus par l'application (AW1 ... AW7, WM1, WM2) en tant que premières informations à au moins l'un des autres appareils de traitement de données, le message électronique reçu comprenant une adresse d'au moins un autre appareil de traitement de données et la transmission à l'appareil (DV1 ... DV8) de traitement de données défini par cette adresse étant effectuée par l'entité (SI1 ... SI8) de représentation.

4. Appareil (DV1 ... DV8) de traitement de données suivant la revendication 2 ou 3,
**caractérisé en ce que**
l'entité (SI1 ... SI8) de représentation est formée pour la mémorisation intermédiaire de messages électroniques à échanger.

5. Appareil (DV1 ... DV8) de traitement de données suivant l'une des revendications 2 à 4,
**caractérisé en ce que**
l'entité (SI1 ... SI8) de représentation est formée pour le traitement de messages e-mail, d'éléments relatifs à des dates limites ou d'inscriptions sur un agenda en tant que messages électroniques.

6. Appareil (DV1 ... DV8) de traitement de données suivant la revendication 1,
**caractérisé en ce que**
l'application (AW1 ... AW7, WM1, WM2) est un dispositif pour l'accès à une ressource (PR, GW), la ressource (PR, GW) pouvant être utilisée par au moins l'un des autres appareils de traitement de données sur au moins l'une des deux liaisons de données.

7. Appareil (DV1 ... DV8) de traitement de données suivant la revendication 6,
**caractérisé en ce que**
l'entité (SI1 ... SI8) de représentation est conçue de telle sorte que la ressource (PR, GW) utilisable par au moins un autre appareil (DV1 ... DV8) de traitement de données peut être une imprimante ou un accès réseau.

8. Appareil (DV1 ... DV8) de traitement de données suivant l'une des revendications 6 ou 7,
**caractérisé en ce que**
l'entité (SI1 ... SI8) de représentation est pourvue d'un dispositif d'autorisation, le dispositif d'autorisation étant formé pour la libération et/ou pour le blocage de la ressource (PR, GW) accessible à l'aide de l'application (AW1 ... AW7, WM1, WM2) pour au moins l'un des autres appareils de traitement de données.

9. Appareil (DV8, DV9) de traitement de données suivant la revendication 1,
**caractérisé en ce que**
l'application (WM1, WM2) est formée pour le traitement d'informations de présence d'au moins l'un des autres appareils (DV8, DV9) de traitement de données, et **en ce que** l'entité (SI8, SI9) de représentation est installée pour la réception des informations de présence en tant que deuxièmes informations sur au moins l'une des deuxièmes liaisons de données par au moins l'un des autres appareils (DV8, DV9) de traitement de données et pour la transmission des informations de présence en tant que premières informations relatives à l'application (WM1, WM2).

10. Appareil (DV8, DV9) de traitement de données suivant la revendication 1 ou 9,
**caractérisé en ce que**
l'application (WM1, WM2) est formée pour la génération d'informations de présence à l'aide de l'appareil (DV8, DV9) de traitement de données et/ou d'un utilisateur de l'appareil (DV8, DV9) de traitement de données en tant que premières informations, et **en ce que** l'entité (SI8, SI9) de représentation est installée pour l'envoi des informations de présence générées en tant que deuxièmes informations sur au moins l'une des deuxièmes liaisons de données à au moins l'un des autres appareils (DV8, DV9) de traitement de données.

11. Appareil (DV8, DV9) de traitement de données suivant la revendication 9 ou 10,
**caractérisé en ce que**
l'application (WM1, WM2) est installée pour l'échange des informations de présence en tant que premières informations conformément au protocole SIP (SIP = Session Initiation Protocol = protocole d'initiation de session), et **en ce que** l'entité (SI8, SI9) de représentation a une fonction (RG8, RG9) d'enregistrement de présence SIP et une fonction (PS8, PS9) de serveur de présence SIP.

12. Appareil (DV1 ... DV8) de traitement de données suivant la revendication 1,
**caractérisé en ce que**
l'application (AW1 ... AW7, WM1, WM2) comprend une fonction d'affichage ou une fonction de traitement pour les adresses, et **en ce que** l'entité (SI1 ... SI8) de représentation est formée pour la transmission de l'adresse d'au moins l'un des autres appareils de traitement de données en tant que premières informations à l'application (AW1 ... AW7, WM1, WM2).

13. Appareil (DV1 ... DV8) de traitement de données suivant la revendication 12,
**caractérisé en ce que**
l'entité (SI1 ... SI8) de représentation est installée pour l'appel de l'adresse à transmettre à l'application (AW1 ... AW7, WM1, WM2) en tant que deuxièmes informations par au moins un autre appareil (DV1 ... DV8) de traitement de données.

14. Appareil (DV1 ... DV8) de traitement de données suivant la revendication 12 ou 13,
**caractérisé en ce que**
l'application (AW1 ... AW7, WM1, WM2) est un programme d'affichage et de traitement pour les messages électroniques et **en ce que** l'adresse peut être utilisée pour l'envoi de messages électroniques.

15. Réseau (NW, NW2, NW3, NW4) ad-hoc
**caractérisé en ce qu'**
au moins un premier et un deuxième appareil (DV1 ... DV8) de traitement de données sont disposés sur le réseau (NW, NW2, NW3, NW4) ad-hoc suivant l'une des revendications précédentes, l'application (AW1 ... AW7, WM1, WM2) du premier appareil de traitement de données étant formée pour l'échange d'informations avec l'entité (SI1 ... SI8) de représentation du deuxième appareil de traitement de données.

16. Réseau (NW, NW2, NW3, NW4) ad-hoc suivant la revendication 15,
**caractérisé en ce que**
l'application (AW1 ... AW7, WM1, WM2) du premier appareil de traitement de données est installée pour l'échange des informations au moyen de l'entité (SI1 ... SI8) de représentation du premier appareil de traitement de données.

17. Réseau (NW, NW2, NW3, NW4) ad-hoc suivant la revendication 15 ou 16,
**caractérisé en ce que**
l'application (AW1 ... AW7, WM1, WM2) du deuxième appareil de traitement de données est formée pour l'échange d'informations avec l'entité (SI1 ... SI8) de représentation du premier appareil de traitement de données.
